# EUROPEAN PATENT SPECIFICATION

(11) **EP 2 784 364 B1**
(45) Date of publication and mention of the grant of the patent: **16.03.2016**
(21) Application number: 14160790.3
(22) Date of filing: 19.03.2014
(51) Int. Cl.: F16L 5/02, H01R 13/52, H01R 13/523, H02G 3/22, B63J 3/04, B63B 17/00, B63B 21/04, F16B 5/02, H02G 9/06

(54) **System and method for connecting a line to a marine device**
System und Verfahren zur Verbindung einer Leitung an eine marine Vorrichtung
Système et procédé de raccordement d'une ligne à un dispositif marin

(30) Priority: 25.03.2013 WO PCT/ES2013/070196
(43) Date of publication of application: 01.10.2014
(73) Proprietor: FUNDACIÓN TECNALIA RESEARCH & INNOVATION, 20009 San Sebastián (Guipúzcoa) (ES)
(72) Inventor: Rico Rubio, Antonio, 20009 Donostia - San Sebastián (ES); Ruiz-Minguela, Pablo, 20009 Donostia - San Sebastián (ES); Sánchez Lara, Miren Josune, 20009 Donostia - San Sebastián (ES); Del Pozo Martín, Alberto, 20009 Donostia - San Sebastián (ES); Villate Martínez, José Luis, 20009 Donostia - San Sebastián (ES)
(74) Representative: Stiebe, Lars Magnus

(56) References cited:
- WO-A1-2010/051872
- WO-A2-98/53530
- WO-A2-2010/004314
- US-A- 3 588 781
- US-A- 4 050 766
- US-A- 4 952 160

## Description

### TECHNICAL FIELD

The present invention relates to the field of systems for connection and disconnection between a line and a marine device, for example, a ship or a marine power generator.

### BACKGROUND OF THE INVENTION

There are a large number of marine devices used for extracting raw materials (for example, oil or gas) or for power generation (for example, electricity production based on wave motion, or based on wind) in marine environments. Often semi-submerged devices are used for these purposes, anchored to the sea bed, or supported on piles.

Often it is necessary to establish connections with these marine devices in order to transfer the extracted raw materials, or to distribute the generated electricity. Connection systems have been developed for this purpose, for example, to connect a marine device to a transmission line through which it is possible to transport electricity, and/or fluids such as gas or oil, and/or data, between the marine device and a point external to the marine device, for example, for the transmission of electricity from the marine device to a land-based distribution grid.

At the same time, it may be necessary to maintain the position of the marine device in the marine environment, to which effect mooring lines can be used, anchored to the sea bed at one end and connected to the device at the other.

In all these cases it may be necessary to connect the aforesaid lines to the marine device, in the marine medium. This type of connections must generally fulfil a series of requirements, which include the following:
- *Quick connect*/*disconnect coupling.* The connection system must allow the connection to be performed quickly, with simple manoeuvres, in such a way that it can be performed in a short time, taking advantage, for example, of good sea conditions.
- *Emergency Release Coupling.* In the event of a controlled emergency scenario, for example, if there is a rough weather forecast that could give rise to damage, the connection system must allow a quick disconnection without requiring the intervention of divers, robots, auxiliary craft or other means.
- *Break Away Coupling:* In the event of an uncontrolled emergency scenario, for example, excessive tension on the line caused by the impact of a ship, the connection system must ensure automatic disconnection between the line and the device, for example, by means of a controlled release, to prevent more serious damage to other more sensitive points of the device or of the line itself.

In the state of the art there are many solutions that allow these requirements to be fulfilled. In general, devices for connecting lines to marine devices can be classified into three major groups:
- Those that connect to a marine device at a point above sea level ("Air Mate"). In this case, the components of the connector appliance do not have to be especially prepared for submersion, since the device in question works in dry conditions. One problem with these devices is that they are often subjected to tension induced by swells.
- Those that connect to a marine device at a point below sea level ("*Wet Mate*'), in which case the components of the device must be designed for connection and operation in the water, thereby increasing their cost and complexity. Also, often the connection or disconnection requires the aid of divers, submarine robots or other auxiliary means.
- Those that connect above sea level but are prepared so that, once the connection has been made, they can function below sea level (*"Dry Mate"*). In this case, at least part of the components of the device must be prepared for working in the water. Often it is necessary to rely on auxiliary craft or divers to perform the manoeuvres needed for their installation.

It has been verified that many of the devices known are complex and/or expensive. WO-2010/004314-A2 describes an example of a system for connecting a line to a marine device.

US-3588781-A describes a bulkhead connector means according to the preamble of claim 1, capable of withstanding a hydrostatic pressure of about 6000 feet of water and being readily disconnected and replaced while under about 6000 feet of water. It has an end portion that forms an annular pressure seal around an aperture formed in the bulkhead of the vessel, the aberture being sealed by a suitable cover, removable from the interior thereof. After the end portion is placed against the aperture on the exterior side of the bulkhead, the sea water is drained from the cavity thus formed, so that the hydrostatic pressure forms the pressure seal around the aperture by pressing the connector tightly thereagainst. From the interior of the vessel, the cover is removed. This system is based on the high hydrostatic pressure that exists at the depth where the connecter is intended to be used and involves the use of drainage channels and valves.

### DESCRIPTION OF THE INVENTION

A first aspect of the invention relates to a connection system for connecting a line to a marine device, which comprises:
at least one connection hole (that is, an opening or orifice) in the marine device, which establishes a communication pathway between the inside of the marine device and a zone external to the marine device;
a connector appliance associated to the line and configured for coupling to the marine device in correspondence with said connection hole, said connector appliance comprising a first cover (the reference to a first cover does not exclude the possibility of there being several first covers, for example a first cover for each one of a plurality of lines or line terminals) configured to cover a terminal of the line (the reference to "a terminal" does not exclude the possibility of the cover in question also covering other terminals, for example, a plurality of terminals; in this context, the word "terminal" must be interpreted in a broad sense, encompassing any terminal or end for connecting a line, for example, one or several terminals or electrical contacts, the connection terminal of a line for transporting fluids, a terminal for connection of an optic cable, etc.) in a watertight manner (i.e., to prevent water from contacting the terminal), said first cover being configured so that it can be opened (in this context, the term "be opened" must be interpreted in a broad sense, and includes the removal of the cover, folding/pivoting of the cover, or any change in the position or configuration of the cover that allows access to the terminal formerly covered by the cover) from the inside of the marine device when the connector appliance is coupled to the marine device in correspondence with said connection hole, to allow access to said terminal from inside the marine device;
securing means for securing the connector appliance to the marine device, said securing means being disposed in such a way that they can be actuated from the inside of the marine device, to selectively secure the connector appliance to the marine device (in such a way that it is secured to the marine device) or release the connector appliance from the marine device (in such a way that it can be separated from the marine device, for example, in the event of a controlled emergency situation, for example, when there is a rough weather forecast that could represent a threat to the system's integrity);
a second cover situated in the marine device and configured to cover the connection hole in a watertight manner (so that water cannot enter the inside of the marine device through said connection hole when it is open, in other words, when the connector appliance is not in place; the possibility is not excluded of the second cover covering several connection holes, if there are several of them), said second cover being configured so that it can be opened (in this context, the term "be opened" must be interpreted in a broad sense, and includes the removal of the cover, folding/pivoting of the cover, or any change in the position or configuration of the cover that allows access to the connection hole and to the part of the connector appliance mounted on said connection hole) from the inside of the marine device, in order to allow access, from the inside of the marine device, to said first cover and to the terminal of the line.

The invention therefore allows a line to be connected to a marine device, in any part of this device, including at a point below sea level, without the majority of its elements having to be specifically designed to withstand the marine environment; it is possible to use components commonly used on land. Also, it is possible to connect and disconnect quickly, to have a quick release in the case of a controlled emergency, and also a break away system in the event of an uncontrolled emergency, without having to use expensive and complex mechanisms or systems.

In this patent, the word "line" must be interpreted in a broad sense: it may refer to a line for the transmission of energy, fluid(s), data and/or power. For example, it could be an electrical cable or line for the transmission of electricity, a pipe for transporting oil or gas, a pipe for transporting a hydraulic fluid, a pipe for pneumatic transmissions, an electrical or optic fibre cable for data transmission, or a mooring line or cable or chain, or any other type of conduit, joint or similar. It may also refer to a combination of the aforesaid elements. The line must be capable of being connected to at least one marine device.

The expression "marine device" must also be interpreted in a broad sense: it encompasses any naval structure capable of providing temporary access inside to a person (for example, a wave energy converter or a marine wind power installation) or of accommodating on a continuous basis a stable crew (as in the case of ships, submarines, oil platforms, etc.). It may be a floating marine device, or one that is submerged, moored, resting on the seabed, sailing, etc.

The first cover and the second cover may be fitted with gaskets in order to guarantee a tight seal of said covers, thereby preventing water from coming into contact with the terminals of the line inside the connector appliance, and water from entering the marine device.

When the connector appliance remains disconnected from the marine device, one of the ends or terminals of the line remains housed inside the connector appliance, protected by the first cover, so that it is not in contact with the marine medium. When the connector appliance is connected to the marine device, the end of the line that remained protected inside the connector appliance and protected by the first cover, can be extracted and connected to equipment inside the marine device, without at any time coming into contact with the marine medium. In this way, the aforesaid end of the line is never exposed to the marine medium, meaning that the connection terminals do not have to be specific for marine environments.

During the connection or disconnection manoeuvre, the other end of the line may remain moored to the seabed, in the case of a mooring line, or connected to land, or to another device for the transmission of fluids, electrical current, data, etc.

The securing means comprise means for mechanical interconnection between the connector appliance and the marine device. A mechanical interconnection is preferred, due to its reliability. For example, the mechanical interconnection can avoid or substantially avoid dependence on external parameters such as hydrostatic pressure.

In some embodiments of the invention, the means for mechanical interconnection comprise at least one element, such as a moveable element, associated with the marine device and arranged to mechanically engage with a corresponding element associated with the connector appliance. For example, one or more triggers, hooks, or other kinds of mechanical retainers can be used. In many embodiments, some kind of threaded connection can be preferred. In some of these embodiments, the means for mechanical interconnection comprise a plurality of threaded elements such as bolts, associated with the marine device and arranged to engage with threaded elements, such as threaded bores, holes or recesses, associated with the connector appliance. In some of these embodiments, the threaded elements associated with the marine device are bolts that are arranged so that they can rotate around their longitudinal axes, the bolts being arranged so that they cannot move in an axial direction, that is, so that they cannot substantially move in their longitudinal direction. Thereby, when the bolts engage with the threaded openings, recesses or bores in the connector appliance, turning the bolts in one direction will pull the connector appliance towards the marine device, thereby contributing to the establishment of a watertight connection between the connector appliance and the marine device, and turning the bolts in the opposite direction will push the connector appliance away from the marine device.

In some embodiments of the invention, the securing means comprise at least one bolt (for example, a set of seal nuts and bolts, which allows the connector appliance to be secured to the marine device by means of a plurality of threads, in a sealed manner; for example, the connector appliance may be provided with a plurality of threaded elements that can be coupled to a type of nuts disposed in the marine device and that can be actuated from inside the marine device for securing or releasing the connector appliance) and/or at least one trigger that serves to retain the connector appliance in the marine device. For example, a good solution could be the use of nuts and bolts provided with tight seals, in such a way that they can penetrate and pass through the hull of the marine device without water entering through said penetration. This type of seal nuts and bolts is already known in the state of the art and used in valves and hydraulic pumps; therefore, no further explanation is required.

In some embodiments of the invention, the connector appliance comprises a casing with a first hole (opening or orifice) and a second hole (opening or orifice), the line entering through the first hole in a sealed manner (in other words, in such a way that water cannot enter through the hole, for example, due to the presence of a tight seal or sealing means between the line and the casing in correspondence with the hole), and the second hole being covered by said first cover when said first cover is in a closed position, in such a way that a dry zone is established between the first hole and the second hole. These holes allow the connector appliance to be installed on the line. The line may be introduced through the first hole until it peers through the second hole. Then, this second hole can be closed with the first cover. The length of the line that remains inside the casing should be sufficient to allow the required connections to be made with the equipment of the marine device to which the line is to be connected. Obviously, there may be more than two holes, depending on, for example, the number of lines to connect and/or the number of connection holes in the marine device. The casing may comprise part of the securing means, for example, threaded holes or bores arranged to receive threaded rods or bolts associated with the marine device, or threaded rods that are introduced in corresponding adjustable and watertight female means situated in the marine device and which can be actuated to secure or release the casing to or from the marine device, respectively.

The dry zone between the two holes may therefore house the line terminal or terminals that will be connected to the marine device, in such a way that said terminal or terminals will not be in contact with the water during the manoeuvres for connecting the connector appliance to the marine device and, if the first cover is coupled again prior to disconnection, nor will there be contact with the water once the connector appliance has been disconnected from the marine device.

In some embodiments of the invention, the casing comprises a gasket configured to be placed against a part of the marine device when the connector appliance is coupled to the marine device. In this way, water is prevented from entering through the connection hole, between the casing and the surface of the marine device on which it rests.

According to the invention, the securing means are arranged so that said mechanical interconnection can be actuated from inside the marine device also when the second cover is not open, in such a way that it is possible to secure the connector appliance to the marine device before opening the second cover, and to close the second cover before releasing the connector appliance from the marine device, in such a way that the risk of water entering inside from the outside is prevented.

In some embodiments of the invention, the first cover is secured in its closed position by means of a plurality of threaded elements, and/or the second cover is secured in its closed position by means of a plurality of threaded elements. This type of securing is generally considered to be very safe.

In some embodiments of the invention, the first cover is a folding or pivoting cover coupled to the connector appliance by means of a first articulation, and/or the second cover is a folding or pivoting cover coupled to the marine device by means of a second articulation. In this way, it is guaranteed that the covers always remain in their place, ready to be closed again in, for example, an emergency situation.

Also, or as an alternative to these closing means, one of the covers or both covers can be provided with trigger-type closing systems, or any other suitable means of closing to establish a watertight and safe seal of the covers.

Therefore, in correspondence with the connection hole there may be two securing systems, namely the securing means to secure the connector appliance to the marine device, and securing means to secure the second cover in a closed position, to prevent the entry of water through the connection hole, for example, in the absence of the connector appliance.

In some embodiments of the invention, the connector appliance has positive floatability (in this way, in the event of being released from the hull of the marine device, it can float to the surface, facilitating its detection) and/or is joined to a surface buoy, so as to make it easy to find it. The buoy may be joined to the connector appliance by means of a suitable rope, chain or cable that helps to hoist it up to the surface or facilitates the connection manoeuvre.

In some embodiments of the invention, the line is held by at least a clamping jaw. For example, the connector appliance may include at least one clamping jaw for holding the line. In this way, it is possible to ensure that the external forces exerted on the line affect the connector appliance and not, for example, the connection between the terminal of the line and an equipment to which the line is connected inside the marine device. At the same time, as an alternative or complement it is possible to secure the line with one or more clamps arranged inside or outside the marine device.

In some embodiments of the invention, the line has at least one movement restrictor to prevent said line from bending in an area close to the connector appliance, for example a movement restrictor tube that can be more rigid than the line itself, and be disposed in correspondence with the line to prevent said line from bending in an area close to the connector appliance.

In some embodiments of the invention, the connector appliance comprises a first part designed to be secured to the marine device by means of the securing means, and a second part, the line being coupled to said second part, said first part and said second part being joined together by a less resistant zone, in such a way that in response to a force of traction that exceeds a predetermined threshold, said second part separates from said first part, releasing the line from the marine device without any water leakage. In other words, it is a break away system for emergency situations, of the *"Break Away Coupling"* type. For example, the connector appliance may comprise a sacrificial body that will break away in the event of a threshold load being exceeded, in addition to a sacrificial connection, which will also break in the event of a certain load being exceeded. The sacrificial body may be coupled with the connector appliance, adjoined to the latter in its wet zone. Its geometry may be such that it allows for a watertight chamber inside that will house an auxiliary connection, also sacrificial, of the line to be connected. The sacrificial body may be formed by two pieces having geometries such that, when assembled, they form the aforesaid watertight chamber. One of the two parts may be fixed and linked to the casing of the connector appliance, solid with it in its wet zone. The other may be a part that can break away, assembled on the fixed part, both forming the aforesaid sacrificial body. The part that can be discoupled may have a hole, provided with watertight closing and a clamp for holding the line. The assembly of both parts may be achieved by means of a securing system with a threshold load, for example, of the nuts and bolts type or similar, having a pre-established resistance as its threshold load, in such a way that if that threshold load is exceeded in the securing system, the piece that can be discoupled disassembles from the fixed part, breaking away from the sacrificial body.

In the phase of preparation of the connector appliance (for example, in a workshop) a sacrificial connection can be made in the line, near the end to be connected in the marine device, and at a distance from that end such that it coincides with the watertight chamber created with the described sacrificial body. The sacrificial connection must have a break or break away load that is lower than the threshold load of the securing system of the parts of the sacrificial body.

In the event of dealing with a mooring line the use of a sacrificial connection is not necessary, it being sufficient for the end of the mooring line to be solidly connected to the break away part.

The line may be housed in the hole of the break away part, achieving the watertightness by means of an appropriate watertight seal and the line being solidly joined to the break away part by means of an appropriate clamp, in such a way that the tensions to which the line is subjected are transmitted directly to the break away part. When the line is subjected to a load in excess of the load established as the threshold, this load will be transmitted to the break away part. Given that the break away part is assembled on the fixed part by means of a securing system that upon reaching the threshold load allows disassembly to take place, the break away part will be released. At that moment, the sacrificial connection will be the weakest point of the entire assembly, meaning that it will break or break away, fully releasing the marine device from the line without there being any danger of water entering the marine device, because the rest of the connector appliance will remain located in correspondence with the connection hole, closing it off. In some embodiments of the invention, the line transmits electricity, fluids and/or data, said first part comprising at least one electrical contact or data connection or hydraulic terminal and said second part comprising at least one electrical contact or data connection or hydraulic terminal, said electrical contacts, data connections or hydraulic terminals being connected to each other to complete an electrical or data or hydraulic connection between the line and the marine device, said electrical contacts or data connections or hydraulic terminals being configured to separate from each other and to break said electrical, data or hydraulic connection, when said second part is separated from said first part.

In some embodiments of the invention, the system comprises pulling means to pull the connector appliance towards the connection hole. These pulling means may comprise, for example, a cable joined to a means of traction or winding of the cable, for example, by means of a pulley, or a reel or similar. These pulling means may be situated in correspondence with the connection hole, covered by the second cover when said second cover is closed, or may be situated in the connector appliance itself.

During the manoeuvre to connect the line to the marine device it is necessary to correctly couple the connector appliance to the connection hole of the marine device, in such a way that the securing means can act appropriately. This guiding can be done either manually, with the help of a diver, or by means of any other guidance system that pulls the connector appliance and positions it correctly on the connection hole. The guidance or pulling system for coupling may consist, for example, of at least one mechanical traction device, in addition to a cable, rope or chain joined at one end to the traction device and at the other to the connector appliance, in such a way that it is possible to pull the connector appliance towards the connection hole, thereby facilitating their coupling. Preferably, the mechanical traction device can consist of a cable, rope or chain reel, which, for example, may be housed inside the second cover and actuated by a motor housed outside said cover. One end of the traction cable or similar may be secured to the reel, whereas the other is connected to the connector appliance in such a way that when the reel is actuated the connector appliance is pulled towards the connection hole. In this embodiment of the invention, the shapes of both the connector appliance and the connection hole may be such that they facilitate the correct positioning of the connector appliance inside the connection hole.

Another aspect of the invention relates to a method for connecting a line to a marine device by means of a system such as the one described further above. The method comprises the steps of:
(a1) placing the connector appliance in correspondence with the connection hole, to which, in some embodiments of the invention, it may be guided manually by means of a pulling or traction system, such as explained above;
(a2) securing the connector appliance to the marine device by means of the securing means;
(a3) opening the second cover, for example, by removing it or folding/ pivoting it;
(a4) opening the first cover, for example, by removing it or folding/pivoting it; and
(a5) connecting the terminal of the line to equipment disposed inside the marine device.

In some embodiments of the invention, the method comprises additionally the step of pulling the connector appliance to the connection hole, by means of at least one flexible traction element; the pulling may be achieved using a pulling system disposed on the side of the connector appliance or on the side of the marine device.

Another aspect of the invention relates to a method for disconnecting a line from a marine device when the line is connected to the marine device with a connection system such as the one described above. The method comprises the steps of:
(b1) disconnecting the terminal of the line inside the marine device;
(b2) optionally, closing, placing and/or securing the first cover;
(b3) closing, placing and/or securing the second cover;
(b4) releasing the connector appliance from the marine device by actuating the securing means.

In this way, both connection and disconnection can be performed without the terminal or terminals of the line having to come into contact with the marine medium.

### BRIEF DESCRIPTION OF THE DRAWINGS

As a complement to the description and with a view to contributing towards a better understanding of the characteristics of the invention, according to examples of practical embodiments thereof, a set of drawings is attached as an integral part of this description, which by way of illustration and not limitation, represent the following:
Figure 1 shows a first view in perspective of the connector appliance according to a possible embodiment of the invention, coupled to a marine device.
Figure 2 shows an exploded view in perspective of the connector appliance according to said embodiment of the invention, in addition to some of the associated elements.
Figure 3 shows a view in perspective of the casing that forms part of the connector appliance in this embodiment of the invention.
Figure 4 shows another view in perspective of the casing.
Figure 5 shows a view in perspective of the casing with some of the elements associated thereto.
Figure 6 shows a view in perspective of the casing closed by the first cover.
Figure 7 shows a view in perspective from the inside of the marine device, representing the connection hole in the marine device, in addition to the second cover.
Figure 8 shows a view in perspective from the outside of the marine device, one moment before the connector appliance is coupled to the connection hole.
Figure 9 shows the same situation as figure 8, but this time from the inside of the marine device.
Figure 10 shows a view in perspective from the inside of the marine device wherein the connector appliance is secured to the marine device, in correspondence with the connection hole.
Figure 11 shows a view in perspective from the inside of the marine device, after opening or removing the second cover.
Figure 12 shows a view in perspective from the inside of the marine device, after opening or removing the first cover.
Figure 13 shows a view in perspective from the inside of the marine device, where it is possible to see how the terminals of the line to be connected have been connected to an equipment or terminal disposed inside the marine device.
Figure 14 shows a view in perspective from the outside of the marine device, where it is possible to see the part of the mechanism that allows the emergency break away.
Figure 15 shows a view in perspective from outside the marine device, where it is possible to see how an emergency break away has occurred.
Figure 16 shows a view in perspective of an embodiment wherein pulling means have been contemplated in order to pull the connector appliance to the connection hole.
Figure 17 illustrates schematically an alternative embodiment of the covers.
Figure 18 illustrates schematically how the securing means can be embodied in some embodiments of the invention.

### DESCRIPTION OF EMBODIMENTS OF THE INVENTION

What follows is a description of embodiments of the invention. In this part of the description a line for transporting electricity has been considered, but the system described is equally valid for lines that transport only data, only energy, only fluids, or anchoring or mooring lines, and for lines that serve to transport any combination of data, energy, fluids and/or anchoring or mooring lines. For example, the lines described may be hoses or connection anchors between any of the following elements: energy harvesters, interconnection systems, marine bases, connection systems with a land-based power grid, or any other element of the marine energy generation system, as well as the sea bed or appropriate anchoring point.

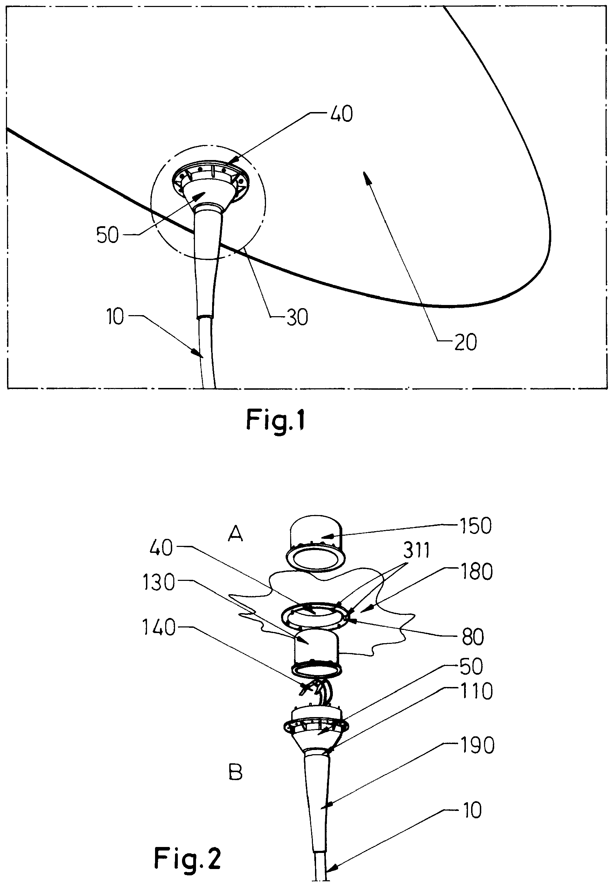

Figure 1 shows an external view of an embodiment of the invention wherein the connection system comprises a connector appliance 30 for connecting a line 10 to a marine device 20. In this embodiment, the coupling between the connector appliance 30 and the marine device 20 is carried out on the lower part of the marine device, below the surface of the sea. However, it is also possible, within the scope of the invention, for this coupling to be made in any part of the marine device, even above the surface of the sea.

In figure 1 it is shown how the connector appliance, which is coupled to the marine device in a connection hole 40 contemplated in the hull of the marine device, comprises a casing 50 that remains partially in contact with the sea, leaving the other part in contact with the inside of the marine device, thereby delimiting a wet zone and a dry zone of the casing 50.

Figure 2 shows an exploded view in perspective, from the outside of the marine device 20, wherein one can observe a plurality of the representative elements of this embodiment of the connector appliance, in addition to some of the auxiliary elements in the marine device for correct coupling of the connector appliance. Reference number 180 represents the zone of the hull of the marine device where the connection is made; above this zone 180 is the inside A of the marine device, and below it is the outer B zone, which corresponds to the marine medium. In the figure one can see the second cover 150, namely, the closing cover associated to the marine device, and which serves to close off the connection hole 40 in the marine device in a watertight manner. The connector appliance will remain secured to the marine device by means of securing means 80, in this case consisting of nuts and bolts with tight seals, which can be actuated from inside the marine device 20, so as to be able to secure the connector appliance to the marine device and release it from the marine device, all from inside the marine device. In figure 2, the threaded ends 311 of the bolts of the securing means are illustrated.

The casing 50 of the connector appliance has the first cover 130, which serves to close off the dry zone of the casing in which the end of the line to be connected is housed, in a watertight manner; in this case the end of the line presents electrical connection terminals 140. At its lower part, in its wet zone, the casing has a watertight seal 110 and a movement restrictor 190 to reduce the risk of damage to the line 10.

The shape of the connection hole 40 as well as the shapes of the closing covers 130 and 150, can be any on condition that they allow correct coupling between the elements. In the case of the casing 50 and the first cover 130, their shape and geometry may be conditioned by the need to house the terminals 140 of the line to be connected during the connection or disconnection manoeuvre. In some alternative embodiments of the invention, the connector appliance can be conditioned to connect the marine device simultaneously to more than one line.

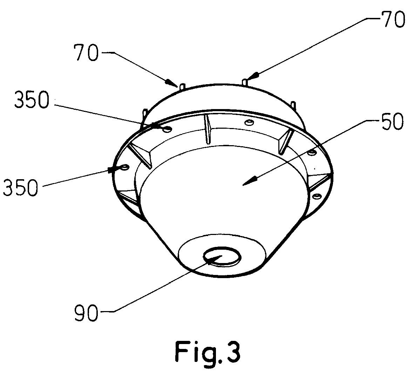

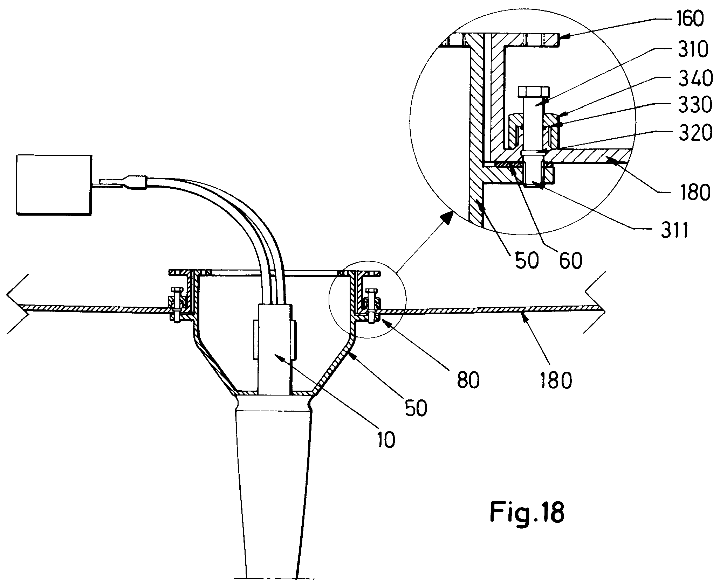

Figure 3 shows a view in perspective of the casing 50 wherein it is possible to see the securing system 70 for the first cover 130, which in this case consists of nuts and bolts located in a dry zone of the casing. Also shown is the hole of the wet zone 90 through which the line 10 is introduced in the casing 50. The holes or bores 350 can be part of the securing means 80, and serve to receive the threaded ends 311 of bolts 310 (shown with more detail in figure 18), so as to establish a mechanical connection or interconnection between the marine device 20 and the connector appliance 30. Connection by means of threaded joints is just an example, and any other suitable connection means, preferably mechanical connection means, are within the scope of the invention.

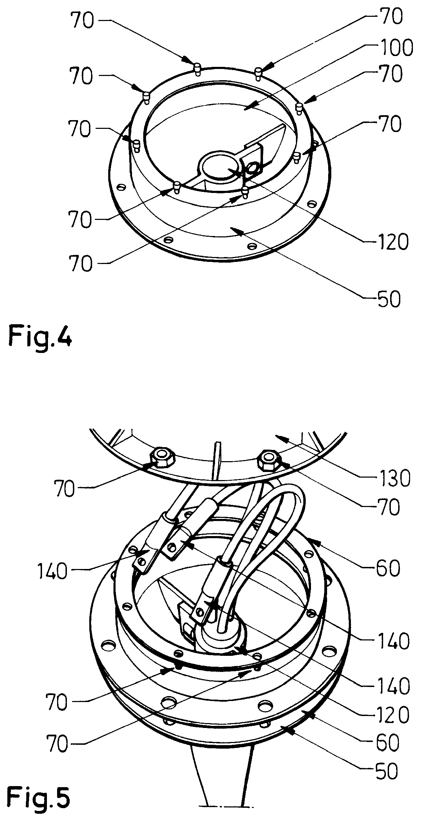

Figure 4 shows another view in perspective of the casing 50 according to this embodiment of the invention, wherein it is possible to observe the securing nuts and bolts 70 for the first cover, in addition to the clamp 120 for securing the line 10 to the casing. Obviously, any type of clamps or jaw clamps can be used which serve to firmly hold the line or lines to the casing or to any other part of the connector appliance or marine device. This clamp or jaw clamp or any other type of securing system may be internal or external to the casing, and it is even possible for said securing system to be situated in the marine device itself, therefore being able to do without the clamp or similar in the connector appliance.

In this figure, reference number 100 represents the hole in the dry part of the casing, which will house the end of the line to be connected.

Figure 5 shows another view in perspective of the connector appliance 30, wherein it is possible to appreciate the casing 50, the securing nuts and bolts 70 for the first cover 130, the clamp 120 for securing the line to the casing, the terminals 140 of the line, in addition to the gaskets 60. The gaskets 60 may be replaced by any other system that provides the assembly with the necessary watertightness. Similarly, any nuts and bolts of the connector appliance or of the marine device may be replaced or complemented by any appropriate securing system.

In figure 5 it is possible to see how the terminals of the line to be connected have been folded and can be housed in the cavity formed by the hole 100 of the dry zone of the casing 50 and the inside of the first cover 130.

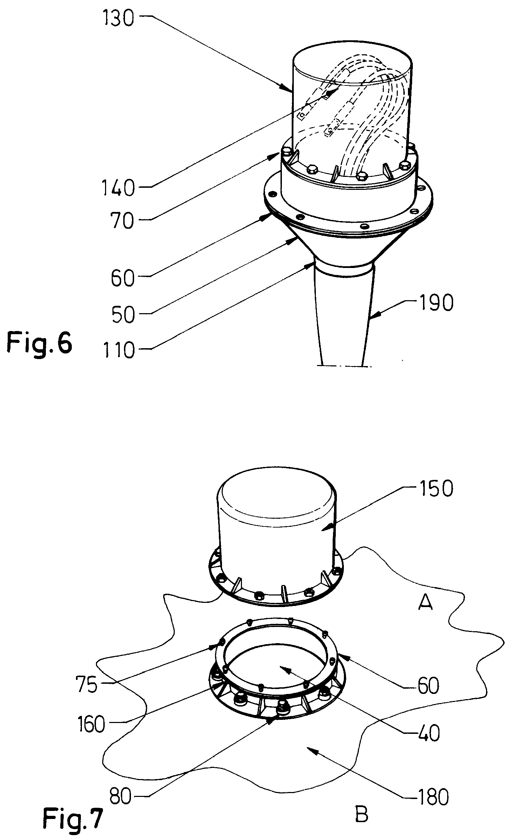

Figure 6 shows a view in perspective of the connector appliance, where it is possible to see the casing 50 with the first cover 130 closed, in other words, disposed on the casing to close off the dry zone of the casing. The first cover 130 is secured to the casing by means of nuts and bolts 70; any other securing system is possible, for example, securing through interlocking, using clips or hooks, or by means of threading, always on condition that an appropriate securing is achieved for a watertight seal. The terminal or terminals 140 of the line remain housed inside the watertight chamber formed between the hole 100 of the dry zone of the casing 50 and the inside of the first cover 130. Also the movement restrictor 190 of the line is shown.

The first cover 130 and the casing 50 may be designed in such a way that the assembly is provided with positive floatability, meaning that when the connector appliance is removed or released from the marine device, the connector appliance 30 rises by its own means to the surface, thereby facilitating its location. Alternatively, the assembly may be given negative floatability, in such a way that once the marine device is released, the connector appliance sinks due to its own weight and remains resting on the sea bed; it is possible, for example, to join it to a buoy that marks its position on the surface, in order to facilitate its location.

Figure 7 shows a view in perspective from the inside of the marine device wherein reference number 180 represents the zone of the hull of the marine device where the connection is made; the connection hole 40 to which the connector appliance is coupled is shown from the inside. It is possible to see the securing means 80 that provide the securing system of the connector appliance to the marine device, in this embodiment of the invention consisting of nuts and bolts with a watertight seal. Also, it is possible to see the second cover 150, with its securing system consisting of nuts and bolts 75 and its gasket 60. The connection hole 40 has a flange 160 around it for placing the second cover 150.

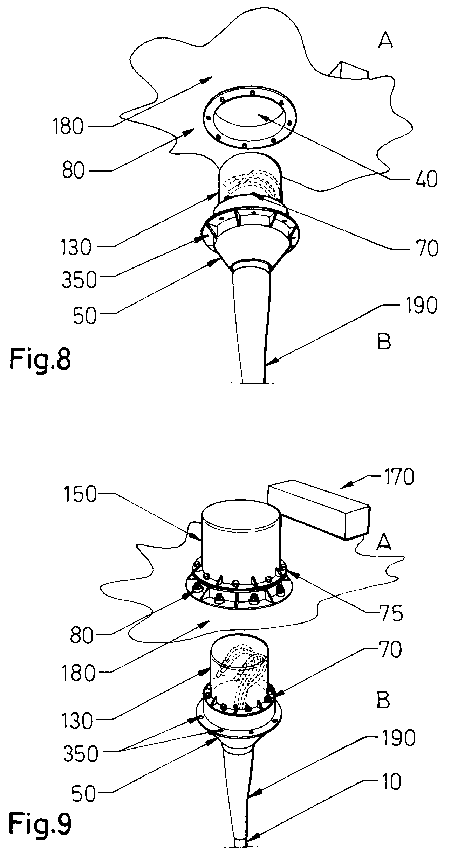

Figure 8 shows a view in perspective from the outside of the marine device, one moment before the connector appliance is coupled to the connection hole 40; this image is also representative of the moment when, during a disconnection operation, the connector appliance has just been released from the marine device, after acting in the corresponding manner on the securing means 80. At this moment, the second cover closes the connection hole 40 on the inside, thereby preventing the entry of water to the inside A of the marine device.

Figure 9 shows a view in perspective of this embodiment from the inside of the marine device, corresponding to the same moment as illustrated in figure 8. It is possible to see how the first cover 130 prevents the line terminal 140 from coming into contact with the marine medium, and how the second cover 150 prevents the entry of water to the inside A of the marine device. Reference 170 represents a terminal or equipment inside the marine device to which the terminals 140 of the line will be connected.

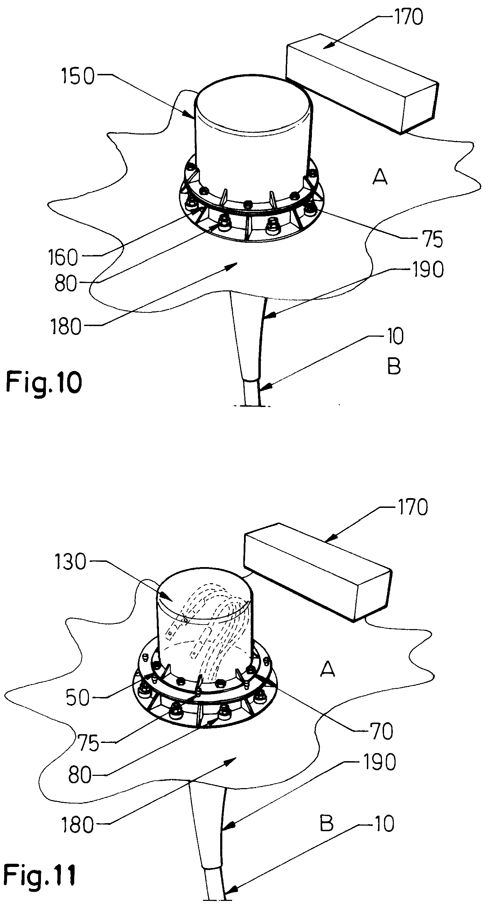

Figure 10 shows a view in perspective from the inside of the marine device, with the connector appliance secured in the connection hole. In this embodiment the connector appliance is secured to the connection hole by means of the nuts and bolts 80, provided with watertight seals to prevent the entry of water inside the marine device. The second cover 150 is still covering the connection hole in a watertight manner, preventing the entry of water into the marine device. In this embodiment of the invention, the securing system of the second cover 150 consists of nuts and bolts 75 which couple the aforesaid second cover 150 to the flange 160 that surrounds the connection hole, sealing it in a watertight manner. The geometry of the second cover 150 is such that it allows the corresponding part of the connector appliance to be housed inside it.

Figure 11 shows a view in perspective from inside the marine device, with the second cover 150 removed, allowing access to the connector appliance from the inside of the marine device. In this situation, the first cover is easily manoeuvrable from the inside of the marine device, without there being any entry of water inside the marine device given that the connection hole is sealed off by the connector appliance itself. In this preferred embodiment, the appropriate geometry of the casing 50, which adjusts to the connection hole, prevents the entry of water inside the marine device.

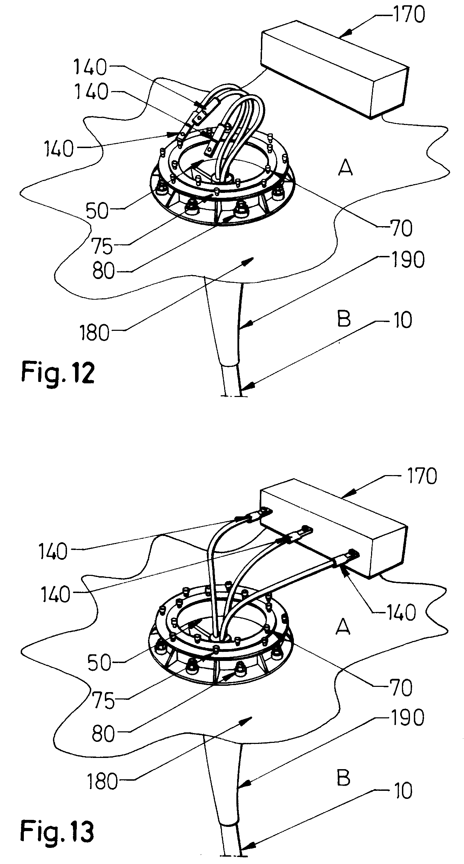

Figure 12 shows a view in perspective from the inside of the marine device, with the first sealing cover 130 open or removed, allowing access to the terminals 140 to be connected, in this embodiment consisting of three electrical terminals. In this situation, the end of the line, namely the electrical terminals 140 in this preferred embodiment, which remained protected inside or below the first cover 130, are easily manoeuvrable from inside the marine device, without these having come into contact with the marine medium at any time, meaning that these terminals do not have to be designed in order to withstand, for example, sea water.

In figure 13, the terminals 140 have already been connected to the equipment or terminal 170. This figure represents the moment when the connection manoeuvre has been completed and when, therefore, the connector appliance is fully operational and ready to transmit, in this embodiment of the invention, the electrical energy that circulates through the line, in order to carry it inside the marine device, at its connection point 170, or to carry the electricity produced by the marine device to a destination external to the marine device, for example, to a land-based power distribution grid. Obviously, the configuration illustrated in figure 13 is also representative of the moment prior to beginning the disconnection manoeuvre described above.

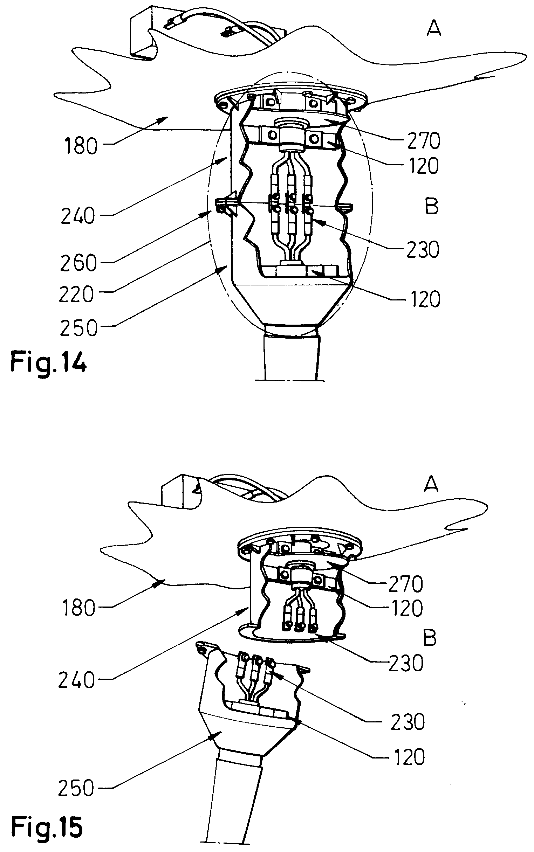

Figure 14 shows a view in perspective of a preferred embodiment of the invention from the outside of the marine device; it is possible to see how the system is provided with an emergency break away system; for improved clarity, the sacrificial body 220 is presented in a section view so that it is possible to see its inside.

The sacrificial body 220 comprises a break away part 250 and a fixed part 240, each of which includes a clamp 120 which firmly secures a portion of line, in such a way that the tractions are appropriately transmitted to the corresponding part. The clamp 120 associated to the break away part 250 is responsible for transmitting to the sacrificial body the threshold load which actuates the emergency break away system. The system presents an auxiliary sacrificial connection 230, which in this embodiment comprises three electrical connections. At the same time, the system comprises securing means 260 with a threshold load; in this embodiment, the securing means comprise a set of nuts and bolts having a mechanical resistance such that they will break when subjected to the established threshold load, releasing the break away part 250. At that moment, when the break away part 250 is released, it will be the auxiliary sacrificial connection 230 that will be subjected to the threshold load, meaning that said connection will break, leaving the line completely separated from the marine device. The watertight separation 270 will at all times prevent water from entering the inside of the marine device through the fixed part 240.

Figure 15 shows a view in perspective of the embodiment, at the moment when the break away system has been actuated, completely releasing the line from the marine device. Due to the fact that the established threshold load has been exceeded, the securing system 260 has released the break away part 250, transmitting the tension to the auxiliary connection 230, which has also broken and/or broken away, fully releasing the line from the marine device.

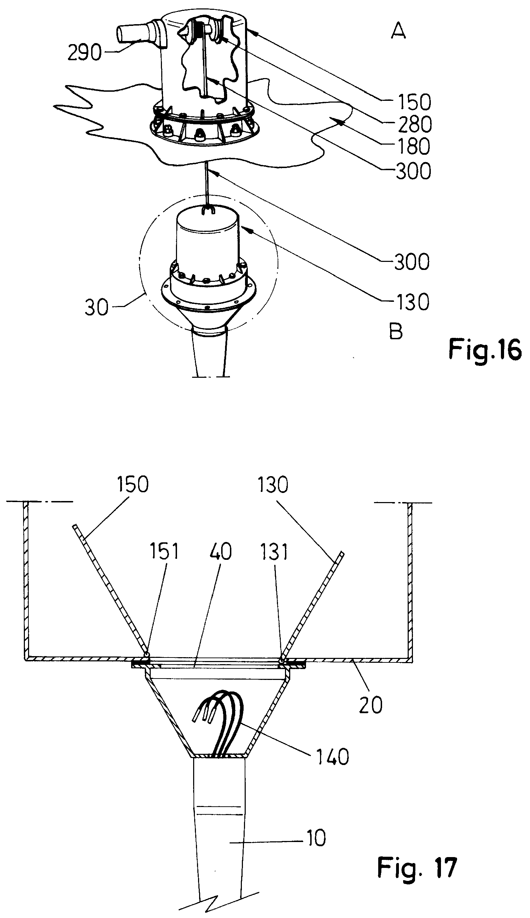

Figure 16 shows a view in perspective of a variant of the described embodiment, wherein, for greater clarity, the second sealing cover 150 is presented in a section view. In this variant, the system includes a guidance subsystem with pulling means that serve for pulling the connector appliance 30 towards the connection hole. Said pulling means include a cable reel 280, which has been installed inside the second cover 150, and which is used to pull the connector appliance, in order to facilitate guiding and coupling of the connector appliance. The cable reel 280 is actuated by a motor 290, installed on the outside of the second cover 150, so that it is protected from the marine medium at all times. The connector appliance 30 is pulled by the cable 300, joined by one end to the first cover 130 and by the other to the reel 280, responsible for providing traction. This configuration facilitates guiding, given that as the cable 300 is gathered by the reel 280, the connector appliance is brought closer to the connection hole.

Figure 17 is a lateral cross sectional schematic view of a variant of the described embodiment, wherein instead of covers that are removed, the first cover 130 and the second cover 150 are folding or pivoting, joined to the connector appliance 30 and to the hull of the marine device 20, respectively, by means of respective hinge systems 131, 151.

A more detailed view of the securing means 80 in accordance with one possible embodiment is shown in figure 18, where it can be observed how the flange of the casing 50 of the connector appliance is placed against the hull 180 of the marine device, with a gasket 60 placed between them to make the joint watertight. The securing means 80 comprise threaded openings or holes 350 in the flange of the casing, and threaded elements associated to the marine device, namely, bolts 310 with threaded ends 311 arranged to be screwed into the threaded holes in the flange of the casing, to establish a mechanical interconnection between the connector appliance 30 and the marine device 20. The bolts 310 are retained by bolt retainers 320 so that they can be turned around their longitudinal axes but so that they cannot move in the axial direction. That is, the bolts are retained but free to rotate around their longitudinal axes. A seal 330 is provided around a portion of each bolt, and a nut 340 is provided over said seal to exert pressure thereon so as to establish a watertight seal around the bolt.

Thus, as the skilled person will readily understand from figure 18, once the casing 50 of the connector appliance 30 is placed against the hull 180 in correspondence with the orifice in the hull, an operator can turn the bolts 310 around their longitudinal axes, thereby establishing the mechanical bolt+bore interconnection between the marine device 20 and the connector appliance 30. The connection between the marine device is a stable and watertight connection.

To separate the connector appliance 30 from the marine device it is enough to turn the bolts 310 in the opposite direction. As the bolts are fixed to the marine device in a way that prevents the bolts from moving in their axial direction, the turning of the bolts will force the casing 50 of the connector appliance away from the hull, against any hydrostatic forces.

Thanks to the mechanical interconnection, the line can be fixed to the marine device in a very stable manner, resistant against, for example, pulling forces exerted on the line.

In this document, the word "comprises" and its variants (such as "comprising", etc.) must not be interpreted as having a meaning that is exclusive, in other words, it does not exclude the possibility of what is being described including other elements, steps, etc.

At the same time, the invention is not limited to the specific embodiments that have been described and encompasses also, for example, the variants that may be embodied by an average person skilled in the art (for example, in terms of the choice of materials, dimensions, components, configuration, etc.), within the scope of what is inferred from the claims.

### List of reference numbers

- 10: Line to be connected
- 20: Marine device
- 30: Connector appliance
- 40: Connection hole associated to the marine device
- 50: Casing
- 60: Gaskets
- 70: Securing system of the first cover
- 75: Securing system of the second cover
- 80: Securing means for securing the connector appliance to the marine device
- 90: First hole of the casing, in the wet zone
- 100: Second hole of the casing, in the dry zone
- 110: Watertight seal between the casing and the line
- 120: Clamp
- 130: First cover
- 131: Articulation or hinge
- 140: Line terminals
- 150: Second cover
- 151: Articulation or hinge
- 160: Flange for placing the cover that seals the connection hole
- 170: Connection point with the line inside the marine device
- 180: Hull of the marine device
- 190: Movement restrictor
- 200: Wet zone of the connector
- 210: Dry zone of the connector
- 220: Sacrificial body
- 230: Auxiliary sacrificial connection
- 240: Fixed part of the sacrificial body
- 250: Break away part of the sacrificial body
- 260: Securing system with threshold load
- 270: Watertight separation
- 280: Cable reel
- 290: Reel actuation motor
- 300: Traction cable, rope or chain
- 310: Bolt
- 311: Threaded ends of bolts
- 320: Bolt retainer
- 330: Seal
- 340: Nut
- 350: Threaded holes, bores or recesses
- A: Inside of the marine device
- B: Outside of the marine device

## Claims

1. Connection system for connecting a line to a marine device, which system comprises:
a connection hole (40) in the marine device, which establishes a communication pathway between an inside (A) of the marine device and a zone (B) outside of the marine device;
a connector appliance (30) associated to the line (10) and configured to be coupled to the marine device (20) in correspondence with said connection hole (40), said connector appliance comprising a first cover (130) configured to cover a terminal (140) of the line in a watertight manner, said first cover (130) being configured so that it can be opened from the inside (A) of the marine device when the connector appliance (30) is coupled to the marine device (20) in correspondence with said connection hole (40), in order to allow access to said terminal (140) from the inside (A) of the marine device (20);
securing means (80) for securing the connector appliance (30) to the marine device (20), said securing means (80) being disposed in such a way that they can be actuated from the inside (A) of the marine device (20), so as to selectively secure the connector appliance (30) to the marine device (20) or release the connector appliance (30) from the marine device (20);
a second cover (150) situated in the marine device (20) and configured to cover the connection hole (40) in a watertight manner, said second cover (150) being configured to be able to be opened from the inside (A) of the marine device, to allow access, from the inside (A) of the marine device (20), to said first cover (130) and to the terminal (140) of the line (10);
wherein said securing means (80) comprise means for mechanical interconnection between the connector appliance (30) and the marine device (20), **characterised in that** the securing means (80) are disposed so that said means for mechanical interconnection can be actuated from the inside (A) of the marine device (20) when the second cover is not open.

2. System according to claim 1, wherein said means for mechanical interconnection comprise at least one element (310) associated with the marine device (20) arranged to mechanically engage with a corresponding element (350) associated with the connector appliance (30).

3. System according to claim 2, wherein said means for mechanical interconnection comprise a plurality of threaded elements (310) associated with the marine device and arranged to engage with threaded elements (350) associated with the connector appliance (30).

4. System according to claim 3, wherein said threaded elements associated with the marine device are bolts (310) that are arranged so that they can rotate, the bolts being arranged so that they cannot move in an axial direction.

5. System according to claim 1, wherein said securing means (80) comprise at least one bolt (310) and/or at least one trigger.

6. System according to any of the preceding claims, wherein the connector appliance (30) comprises a casing (50) having a first hole (90) and a second hole (100), the line (10) entering through said first hole in a watertight manner, and said second hole (100) being covered by said first cover (130) when said first cover is in a closed position, in such a way that a dry zone is established between said first hole (90) and said second hole (100), and wherein, optionally, said casing additionally comprises a gasket (60) configured to adjoin a part of the marine device (20) when the device is coupled to the marine device.

7. System according to any of the preceding claims, wherein said first cover (130) is secured in a closed position by means of a plurality of threaded elements (70), and/or wherein said second cover (150) is secured in a closed position by means of a plurality of threaded elements (75), and/or wherein said first cover (130) is a pivoting cover coupled to the connector appliance (30) by means of a first articulation (131), and/or wherein said second cover (150) is a pivoting cover coupled to the marine device (20) by means of a second articulation (151).

8. System according to any of the preceding claims, wherein the connector appliance has positive floatability and/or is joined to a surface buoy, and/or wherein the line (10) is held by at least one jaw clamp (120), and/or wherein the line (10) has at least one movement restrictor (190) to prevent said line (10) from bending in a zone close to the connector appliance (30).

9. System according to any of the preceding claims, wherein the connector appliance (30) comprises a first part (240) designed to be secured to the marine device by means of the securing means (80), and a second part (250), the line being coupled to said second part (250), said first part and second part being joined together by a less resistant zone, in such a way that in response to a force of traction that exceeds a predetermined threshold, said second part separates from said first part, releasing the line (10) from the marine device (20).

10. System according to claim 9, wherein the line transmits electricity, fluids and/or data, said first part comprising at least one electrical contact (230), data connection or hydraulic terminal and said second part comprising at least one electrical contact (230), data connection or hydraulic terminal, said electrical contacts, data connections or hydraulic terminals being connected to each other in order to complete an electrical or data or hydraulic connection between the line (10) and the marine device (20), said electrical contacts, data connections or hydraulic terminals being configured to separate from each other and to break off said electrical, data or hydraulic connection, when said second part (250) separates from said first part (240).

11. Connection system according to any of the preceding claims, which comprises pulling means (280, 290, 300) for pulling the connector appliance (30) towards the connection hole (40).

12. Method for connecting a line (10) to a marine device (20) by means of a system according to any of the preceding claims, which comprises the steps of
(a1) placing the connector appliance (30) in correspondence with the connection hole (40);
(a2) securing the connector appliance (30) to the marine device (20) by means of the securing means (80);
(a3) opening the second cover (150);
(a4) opening the first cover (130); and
(a5) connecting the line terminal (140) to equipment (170) disposed in the inside (A) of the marine device (20).

13. Method for disconnecting a line (10) from a marine device (20) when the line is connected to the marine device with a connection system according to any of claims 1-11, which comprises the steps of:
(b1) disconnecting the line terminal (140) inside the marine device;
(b2) optionally, closing the first cover (130);
(b3) closing the second cover (150);
(b4) releasing the connector appliance (30) from the marine device (20) by actuating the securing means (80).

## Patentansprüche

1. Verbindungssystem zur Verbindung einer Leitung an eine marine Vorrichtung, wobei
das System umfasst:
ein Verbindungsloch (40) in der marinen Vorrichtung, das einen Übertragungsweg zwischen einem Inneren (A) der marinen Vorrichtung und einer Zone (B) außerhalb der marinen Vorrichtung herstellt,
eine der Leitung (10) zugehörige Steckervorrichtung (30), die so konfiguriert ist, dass sie in Übereinstimmung mit dem Verbindungsloch (40) an die marine Vorrichtung (20) gekoppelt wird, wobei die Steckervorrichtung eine erste Verschlusskappe (130) umfasst, die so konfiguriert ist, dass sie ein Leitungsende (140) der Leitung wasserdicht abdeckt, wobei die erste Verschlusskappe (130) so konfiguriert ist, dass sie vom Inneren (A) der marinen Vorrichtung aus geöffnet werden kann, wenn die Steckervorrichtung (30) in Übereinstimmung mit dem Verbindungsloch (40) an die marine Vorrichtung (20) gekoppelt ist, um den Zugang zu dem Leitungsende (140) vom Inneren (A) der marinen Vorrichtung (20) aus zu ermöglichen,
Befestigungsmittel (80) zur Befestigung der Steckervorrichtung (30) an der marinen Vorrichtung (20), wobei die Befestigungsmittel (80) derart angeordnet sind, dass sie vom Inneren (A) der marinen Vorrichtung (20) aus betätigt werden können, um wahlweise die Steckervorrichtung (30) an der marinen Vorrichtung (20) zu befestigen oder die Steckervorrichtung (30) von der marinen Vorrichtung (20) zu lösen,
eine zweite Verschlusskappe (150), die sich in der marinen Vorrichtung (20) befindet und so konfiguriert ist, dass sie das Verbindungsloch (40) wasserdicht abdeckt, wobei die zweite Verschlusskappe (150) so konfiguriert ist, dass sie vom Inneren (A) der marinen Vorrichtung aus geöffnet werden kann, um vom Inneren (A) der marinen Vorrichtung (20) aus den Zugang zu der ersten Verschlusskappe (130) und zu dem Leitungsende (140) der Leitung (10) zu ermöglichen,
wobei die Befestigungsmittel (80) Mittel zur mechanischen gegenseitigen Verbindung der Steckervorrichtung (30) und der marinen Vorrichtung (20) umfassen, **dadurch gekennzeichnet, dass**
die Befestigungsmittel (80) derart angeordnet sind, dass die Mittel zur mechanischen gegenseitigen Verbindung vom Inneren (A) der marinen Vorrichtung (20) aus betätigt werden können, wenn die zweite Verschlusskappe nicht geöffnet ist.

2. System nach Anspruch 1, wobei die Mittel zur mechanischen gegenseitigen Verbindung mindestens ein der marinen Vorrichtung (20) zugehöriges Element (310) umfassen, das so angeordnet ist, dass es mechanisch in ein entsprechendes der Steckervorrichtung (30) zugehöriges Element (350) eingreift.

3. System nach Anspruch 2, wobei die Mittel zur mechanischen gegenseitigen Verbindung eine Mehrzahl von Gewindeelementen (310) umfassen, die der marinen Vorrichtung zugehörig sind und so angeordnet sind, dass sie in der Steckervorrichtung (30) zugehörige Gewindeelemente (350) eingreifen.

4. System nach Anspruch 3, wobei die der marinen Vorrichtung zugehörigen Gewindeelemente Schrauben (310) sind, die so angeordnet sind, dass sie sich drehen können, wobei die Schrauben so angeordnet sind, dass sie sich nicht in einer axialen Richtung bewegen können.

5. System nach Anspruch 1, wobei die Befestigungsmittel (80) mindestens eine Schraube (310) und/oder mindestens einen Karabiner umfassen.

6. System nach einem der vorangehenden Ansprüche, wobei die Steckervorrichtung (30) ein Gehäuse (50) mit einem ersten Loch (90) und einem zweiten Loch (100) umfasst, wobei die Leitung (10) auf wasserdichte Weise durch das erste Loch hindurchtritt und das zweite Loch (100) durch die erste Verschlusskappe (130) abgedeckt ist, wenn sich die erste Verschlusskappe in einer geschlossenen Stellung befindet, so dass eine trockene Zone zwischen dem ersten Loch (90) und dem zweiten Loch (100) geschaffen wird, und wobei optional das Gehäuse zusätzlich eine Dichtung (60) umfasst, die so konfiguriert ist, dass sie an einen Teil der marinen Vorrichtung (20) grenzt, wenn die Vorrichtung an die marine Vorrichtung gekoppelt ist.

7. System nach einem der vorangehenden Ansprüche, wobei die erste Verschlusskappe (130) in einer geschlossenen Stellung mittels einer Mehrzahl von Gewindeelementen (70) befestigt ist und/oder wobei die zweite Verschlusskappe (150) in einer geschlossenen Stellung mittels einer Mehrzahl von Gewindeelementen (75) befestigt ist und/oder wobei die erste Verschlusskappe (130) eine schwenkende Verschlusskappe ist, die mittels einer ersten Gelenkverbindung (131) an die Steckervorrichtung (30) gekoppelt ist und/oder wobei die zweite Verschlusskappe (150) eine schwenkende Verschlusskappe ist, die mittels einer zweiten Gelenkverbindung (151) an die marine Vorrichtung (20) gekoppelt ist.

8. System nach einem der vorangehenden Ansprüche, wobei die Steckervorrichtung eine positive Schwimmfähigkeit aufweist und/oder an einer Oberflächenboje befestigt ist und/oder wobei die Leitung (10) durch mindestens eine Klemmbacke (120) gehalten wird und/oder wobei die Leitung (10) mindestens einen Bewegungsbegrenzer (190) hat, der verhindern soll, dass sich die Leitung (10) in einer Zone in der Nähe der Steckervorrichtung (30) durchbiegt.

9. System nach einem der vorangehenden Ansprüche, wobei die Steckervorrichtung (30) einen ersten Teil (240), der so ausgestaltet ist, dass er mittels der Befestigungsmittel (80) an der marinen Vorrichtung befestigt ist, und einen zweiten Teil (250) umfasst, wobei die Leitung an den zweiten Teil (250) gekoppelt ist und der erste Teil und der zweite Teil durch eine weniger widerstandsfähige Zone zusammengefügt sind, so dass sich als Reaktion auf eine Zugkraft, die einen vorgegebenen Schwellenwert übersteigt, der zweite Teil von dem ersten Teil trennt, wodurch die Leitung (10) von der marinen Vorrichtung (20) gelöst wird.

10. System nach Anspruch 9, wobei die Leitung Elektrizität, Fluide und/oder Daten überträgt, wobei der erste Teil mindestens einen elektrischen Kontakt (230), mindestens eine Datenverbindung oder mindestens einen hydraulischen Anschluss umfasst und der zweite Teil mindestens einen elektrischen Kontakt (230), mindestens eine Datenverbindung oder mindestens einen hydraulischen Anschluss umfasst, wobei die elektrischen Kontakte, Datenverbindungen oder hydraulischen Anschlüsse miteinander verbunden sind, um eine elektrische oder Daten- oder hydraulische Verbindung zwischen der Leitung (10) und der marinen Vorrichtung (20) zu vollenden, wobei die elektrischen Kontakte, Datenverbindungen oder hydraulischen Anschlüsse so konfiguriert sind, dass sie sich voneinander trennen und die elektrische, Daten- oder hydraulische Verbindung unterbrechen, wenn sich der zweite Teil (250) von dem ersten Teil (240) trennt.

11. Verbindungssystem nach einem der vorangehenden Ansprüche, das Zugmittel (280, 290, 300) zum Ziehen der Steckervorrichtung (30) in Richtung des Verbindungsloches (40) umfasst.

12. Verfahren zur Verbindung einer Leitung (10) an eine marine Vorrichtung (20) mittels eines Systems nach einem der vorangehenden Ansprüche, das die folgenden Schritte umfasst:
(a1) Platzieren der Steckervorrichtung (30) in Übereinstimmung mit dem Verbindungsloch (40),
(a2) Befestigen der Steckervorrichtung (30) an der marinen Vorrichtung (20) mittels der Befestigungsmittel (80),
(a3) Öffnen der zweiten Verschlusskappe (150),
(a4) Öffnen der ersten Verschlusskappe (130) und
(a5) Verbinden des Leitungsendes (140) mit Geräten (170), die im Inneren (A) der marinen Vorrichtung (20) angeordnet sind.

13. Verfahren zur Trennung einer Leitung (10) von einer marinen Vorrichtung (20), wenn die Leitung mit einem Verbindungssystem nach einem der Ansprüche 1 bis 11 mit der marinen Vorrichtung verbunden ist, das die folgenden Schritte umfasst:
(b1) Trennen des Leitungsendes (140) im Inneren der marinen Vorrichtung,
(b2) optionales Schließen der ersten Verschlusskappe (130),
(b3) Schließen der zweiten Verschlusskappe (150),
(b4) Lösen der Steckervorrichtung (30) von der marinen Vorrichtung (20) durch Betätigen der Befestigungsmittel (80).

## Revendications

1. Système de connexion pour connecter une ligne à un dispositif marin, lequel 5 système comprend :
un trou de connexion (40) dans le dispositif marin, qui établit un passage de connexion entre l'intérieur (A) du dispositif marin et une zone (B) située à l'extérieur du dispositif marin ;
un dispositif de connexion (30) associé à la ligne (10) et configuré pour être couplé au dispositif marin (20) en correspondance avec ledit trou de connexion (40), ledit dispositif de connexion comprenant un premier couvercle (130) conçu pour couvrir de façon étanche un terminal (140) de la ligne, ledit premier couvercle (130) étant conçu de telle sorte qu'il peut être ouvert de l'intérieur (A) du dispositif marin lorsque le dispositif de connexion (30) est couplé au dispositif marin (20) en correspondance avec ledit trou de connexion (40) en vue de permettre un accès audit terminal (140) depuis l'intérieur (A) du dispositif marin (20) ;
des moyens de fixation (80) pour fixer le dispositif de connexion (30) au dispositif marin (20), lesdits moyens de fixation (80) étant disposés de telle sorte qu'ils peuvent être actionnés depuis l'intérieur (A) du dispositif marin (20) pour sélectivement fixer le dispositif de connexion (30) au dispositif marin (20) ou décrocher le dispositif de connexion (30) du dispositif marin (20) ;
un deuxième couvercle (150) situé dans le dispositif marin (20) et conçu pour couvrir le trou de connexion (40) de façon étanche, ledit deuxième couvercle (150) étant conçu pour être apte à être ouvert depuis l'intérieur (A) du dispositif marin en vue de permettre un accès, depuis l'intérieur (A) du dispositif marin (20), audit premier couvercle (130) et au terminal (140) de la ligne (10) ;
lesdits moyens de fixation (80) comprenant des moyens d'interconnexion mécanique entre le dispositif de connexion (30) et le dispositif marin (20),
**caractérisé en ce que** les moyens de fixation (80) sont disposés de telle sorte que lesdits moyens d'interconnexion mécanique peuvent être actionnés depuis l'intérieur (A) du dispositif marin (20) lorsque le deuxième couvercle n'est pas ouvert.

2. Système selon la revendication 1, dans lequel les moyens d'interconnexion mécanique comprennent au moins un élément (310) associé au dispositif marin (20) et 35 disposé pour s'engager mécaniquement avec un élément correspondant (350) associé au dispositif de connexion (30).

3. Système selon la revendication 1, dans lequel lesdits moyens d'interconnexion mécanique comprennent une pluralité d'éléments filetés (310) associés au dispositif marin et disposés pour s'engager avec des éléments filetés (350) associés au dispositif de connexion (30).

4. Système selon la revendication 3, dans lequel lesdits éléments filetés associés à dispositif marin sont des boulons (310) qui sont disposés de telle sorte qu'ils peuvent tourner, les boulons étant disposés de telle sorte qu'ils ne peuvent pas se déplacer en direction axiale.

5. Système selon la revendication 1, dans lequel lesdits moyens de fixation (80) comprennent au moins un boulon (310) et/ou au moins une gâchette.

6. Système selon l'une quelconque des revendications précédentes, dans lequel le dispositif de connexion (30) comprend un boîtier (50) ayant un premier trou (90) et un deuxième trou (100), la ligne (10) pénétrant à travers ledit premier trou de manière étanche à l'eau, et ledit deuxième trou (100) étant recouvert par ledit premier couvercle (130) lorsque ledit premier couvercle est dans une position fermée, de telle sorte qu'une zone sèche est établie entre ledit premier trou (90) et ledit deuxième trou (100), et dans lequel, de façon facultative, ledit boîtier comprend en outre un joint d'étanchéité (60) configuré pour jouxter une partie du dispositif marin (20) lorsque le dispositif est couplé au dispositif marin.

7. Système selon l'une quelconque des revendications précédentes, dans lequel ledit premier couvercle (130) est fixé en position fermée au moyen d'une pluralité d'éléments filetés (70), et/ou dans lequel ledit deuxième couvercle (150) est fixé en position fermée au moyen d'une pluralité d'éléments filetés (75), et/ou dans lequel ledit premier couvercle (130) est un couvercle pivotant couplé au dispositif de connexion (30) au moyen d'une première articulation (131), et/ou dans lequel ledit deuxième couvercle (150) est un couvercle pivotant couplé au dispositif marin (20) au moyen d'une deuxième articulation (151).

8. Système selon l'une quelconque des revendications précédentes, dans lequel 35 le dispositif de connexion présente une flottabilité positive et/ou est relié à une bouée de surface, et/ou dans lequel la ligne (10) est maintenu par au moins un manchon de serrage (120), et/ou dans lequel la ligne (10) présente au moins un limiteur de déplacement (190) pour empêcher ladite ligne (10) de fléchir dans une zone proche du dispositif de connexion (30).

9. Système selon l'une quelconque des revendications précédentes, dans lequel le dispositif de connexion (30) comprend une première partie (240) conçue pour être fixée au dispositif marin par l'intermédiaire des moyens de fixation (80), et une deuxième partie (250), la ligne étant couplée à ladite deuxième partie (250), lesdites première partie et deuxième partie étant reliées entre elles par une zone moins résistante, de telle sorte que, en réponse à une force de traction qui est supérieure à un seuil prédéterminé, ladite deuxième partie se sépare de ladite première partie en libérant la ligne (10) du dispositif marin (20).

10. Système selon la revendication 9, dans lequel la ligne transmet de l'électricité, des fluides et/ou des données, ladite première partie comprenant au moins un contact électrique (230), une connexion de données ou un terminal hydraulique et ladite deuxième partie comprenant au moins un contact électrique (230), une connexion de données ou un terminal hydraulique, lesdits contacts électriques, connexions de données ou terminaux hydrauliques étant reliés entre eux afin de compléter une connexion électrique ou de données ou hydraulique entre la ligne (10) et le dispositif marin (20), lesdits contacts électriques, connexions de données ou terminaux hydrauliques étant conçus pour se séparer l'un de l'autre et pour rompre ladite connexion électrique, de données ou hydraulique lorsque ladite deuxième partie (250) se sépare de ladite première partie (240).

11. Système de raccordement selon l'une quelconque des revendications précédentes, lequel comprend des moyens de traction (280, 290, 300) pour tirer le dispositif de connexion (30) vers le trou de connexion (40).

12. Procédé pour raccorder une ligne (10) à un dispositif marin (20) au moyen d'un système selon l'une quelconque des revendications précédentes, lequel procédé comprend les étapes consistant à
(a1) placer le dispositif de connexion (30) en correspondance avec le trou de connexion (40) ;
(a2) fixer le dispositif de connexion (30) au dispositif marin (20) par l'intermédiaire de moyens de fixation (80) ;
(a3) ouvrir le deuxième couvercle (150) ;
(a4) ouvrir le premier couvercle (130) ; et
(a5) connecter le terminal de ligne (140) à un équipement (170) disposé à l'intérieur (A) du dispositif marin (20).

13. Procédé pour déconnecter une ligne (10) d'un dispositif marin (20) lorsque la ligne est connectée au dispositif marine avec un système de connexion selon l'une quelconque des revendications 1-11, lequel procédé comprend les étapes consistant à :
(b1) déconnecter le terminal de ligne (140) à l'intérieur du dispositif marin :
(b2) de façon optionnelle, fermer le premier couvercle (130) ;
(b3) fermer le deuxième couvercle (150) ;
(b4) décrocher le dispositif de connexion (30) du dispositif marin (20) en actionnant les moyens de fixation (80).
